# EUROPEAN PATENT APPLICATION

(11) **EP 3 318 467 A1**
(43) Date of publication of application: **09.05.2018**
(21) Application number: 17199697.8
(22) Date of filing: 02.11.2017
(51) Int. Cl.: B62D 5/04

(54) **STEERING SYSTEM**

(30) Priority: 04.11.2016 JP 2016216557
(71) Applicant: JTEKT Corporation, Osaka-shi, Osaka 542-8502 (JP)
(72) Inventor: YAMAGUCHI, Masashi, Osaka-shi,, Osaka 542-8502 (JP); KANEKO, Tetsuya, Osaka-shi,, Osaka 542-8502 (JP); YAMASHITA, Shuhei, Osaka-shi,, Osaka 542-8502 (JP)
(74) Representative: Winter, Brandl, Fürniss, Hübner, Röss, Kaiser, Polte - Partnerschaft mbB

(57) **Abstract**

Provided is a steering system in which an elastic support portion can be prevented from falling off a subassembly when the subassembly is mounted on a housing. A steering system (S1) includes a ball nut (33a), a driven pulley (34) provided on the ball nut (33a) so as to be rotatable together with the ball nut (33a), a housing (22) that houses the ball nut (33a) and the driven pulley (34) and has a first locking surface (232b) and a second locking surface (222d), a bearing (37) including an outer ring (37b) provided so as to be movable between the first locking surface (232b) and the second locking surface (222d), a first elastic support portion (60) provided between the first locking surface (232b) and one end face of the outer ring (37b), a second elastic support portion (65) provided between the second locking surface (222d) and the other end face of the outer ring (37b), a retaining member (71) configured to lock the first elastic support portion (60), and a guide portion (38) configured to lock the second elastic support portion (65).

## Description

### BACKGROUND OF THE INVENTION

### 1. Field of the Invention

The present invention relates to a steering system.

### 2. Description of the Related Art

Hitherto, there is provided an automotive steering system configured to generate a thrust in an axial direction of a steering operation shaft by a motor as described in Japanese Patent Application Publication No. 2014-227047 (JP 2014-227047 A). In the steering system described in JP 2014-227047 A, a ball screw shaft is formed on the outer peripheral surface of the steering operation shaft to which steered wheels are coupled on both sides via tie rods and the like. A ball nut threadedly engages with the ball screw shaft via balls. The ball nut is coupled to a toothed driven pulley in the axial direction, and the driven pulley is connected to a toothed driving pulley by a belt. The toothed driving pulley is fixed to an output shaft of the motor. With this structure, when a driver steers a steering wheel, the ball nut is driven by the motor to rotate relative to the ball screw shaft. An assist force generated by the motor is applied to the ball screw shaft, thereby assisting a steering torque that is input to the steering wheel by the driver.

In the steering system described in JP 2014-227047 A, a bearing supports the ball nut so that the ball nut is rotatable relative to the housing. An outer ring of the bearing is provided so as to be movable in the axial direction relative to the housing. An elastic support portion constituted by a disc spring or the like is provided between each side of the outer ring of the bearing in the axial direction and the housing. With this structure, the outer ring of the bearing is normally located at the center of its axial movement range by elastic forces of the elastic support portions. When the driver steers the steering wheel that is set at a neutral position, the steering torque is input to the ball screw shaft by the driver before the assist force generated by the motor is applied to the ball screw shaft. Then, the outer ring of the bearing moves slightly in the axial direction relative to the housing against the elastic force of the elastic support portion, and the steered wheels are turned from their neutral positions. Therefore, when the driver operates the steering wheel that is set at the neutral position, a quick initial response is obtained in the steering operation for the steered wheels that are set at the neutral positions.

When an operator mounts the steering system described in JP 2014-227047 A, the ball screw shaft, the ball nut, the bearing, and the elastic support portions are assembled into a subassembly in advance, and this subassembly is mounted on the housing. In the steering system described in JP 2014-227047 A, however, the elastic support portion may fall off the subassembly when the subassembly is mounted on the housing.

### SUMMARY OF THE INVENTION

It is one object of the present invention to provide a steering system in which, when a subassembly obtained by assembling a ball screw shaft, a ball nut, a bearing, and elastic support portions in advance is mounted on a housing, the elastic support portion can be prevented from falling off the subassembly.

A steering system according to one aspect of the present invention includes a steering operation shaft, a ball screw mechanism, a motor, a driving pulley, a driven pulley, an annular toothed belt, a housing, a bearing, a first elastic support portion, a second elastic support portion, a first retaining member, and a second retaining member. The steering operation shaft is configured to move in an axial direction to turn a steered wheel. The ball screw mechanism includes a ball screw shaft formed on an outer peripheral surface of the steering operation shaft, and a ball nut threadedly engaging with the ball screw shaft via a plurality of balls. The motor is configured to output a rotational torque. The rotational torque output from the motor is transmitted to the driving pulley. The driven pulley is provided on the ball nut so as to be rotatable together with the ball nut. The toothed belt is configured to transmit the rotational torque between the driving pulley and the driven pulley. The housing houses the steering operation shaft, the ball screw mechanism, and the driven pulley and has a first locking surface and a second locking surface facing each other in the axial direction. The bearing includes an inner ring fitted to the ball nut or the driven pulley, and an outer ring provided on an outer peripheral side of the inner ring so as to be rotatable relative to the inner ring and to be movable in the axial direction relative to the housing between the first locking surface and the second locking surface. The first elastic support portion is formed into an annular shape, provided between the first locking surface and one end face of the outer ring, and configured to elastically support the outer ring in the axial direction. The second elastic support portion is formed into an annular shape, provided between the second locking surface and the other end face of the outer ring, and configured to elastically support the outer ring in the axial direction. The first retaining member is formed into an annular shape and configured to fix the inner ring to the ball nut or the driven pulley and to lock the first elastic support portion. The second retaining member is formed into an annular shape, provided on the ball nut or the driven pulley as a unit, and configured to lock the second elastic support portion.

According to the steering system described above, the first retaining member locks the first elastic support portion, and the second retaining member locks the second elastic support portion. Therefore, when a subassembly obtained by assembling the steering operation shaft, the ball screw mechanism, the driven pulley, the first elastic support portion, and the second elastic support portion is mounted on the housing, the first elastic support portion is locked by the first retaining member, and the second elastic support portion is locked by the second retaining member. Thus, when the subassembly is mounted on the housing, the first elastic support portion and the second elastic support portion are prevented from falling off the subassembly.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic view illustrating an electric power steering system according to the present invention;
FIG. 2 is a partially enlarged sectional view of a steering assist mechanism of FIG. 1;
FIG. 3 is a partially enlarged sectional view of the periphery of a bearing portion of FIG. 2;
FIG. 4A is a front view of a retaining member; and
FIG. 4B is a side view of the retaining member.

### DETAILED DESCRIPTION OF EMBODIMENTS

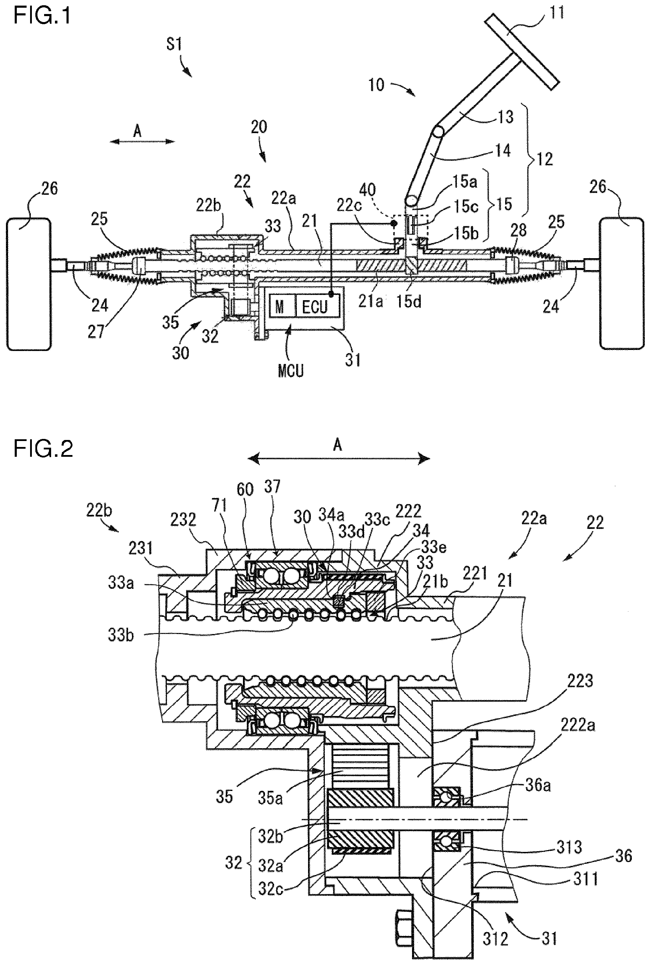

A steering system according to a specific embodiment of the present invention is described below with reference to the drawings. In FIG. 1, a steering system S1 includes a steering mechanism 10, a steering operation mechanism 20, a steering assist mechanism 30, and a torque detection device 40.

The steering mechanism 10 includes a steering wheel 11 and a steering shaft 12. The steering wheel 11 is fixed to the end of the steering shaft 12. The steering shaft 12 transmits a steering torque applied to the steering wheel 11 in order to turn steered wheels 26. The steering shaft 12 is constructed by coupling a column shaft 13, an intermediate shaft 14, and a pinion shaft 15 to each other. The pinion shaft 15 includes an input shaft 15a, an output shaft 15b, and a torsion bar 15c. An output-side portion of the intermediate shaft 14 is connected to an input-side portion of the input shaft 15a, and pinion teeth 15d are formed at an output-side portion of the output shaft 15b.

The steering operation mechanism 20 includes a steering operation shaft 21 and a housing 22 formed into a substantially cylindrical shape. The steering operation shaft 21 is housed in and supported by the housing 22 so as to be linearly reciprocable along an axial direction. In the following description, a direction along the axial direction of the steering operation shaft 21 is also referred to simply as an axial direction A (see FIG. 1 to FIG. 3). In FIG. 1 to FIG. 3, the left side of the drawing sheet is defined as a first side (first end side) in the axial direction A, and the right side of the drawing sheet is defined as a second side (second end side) in the axial direction A.

The housing 22 is formed of a light metal such as an aluminum alloy. The housing 22 includes a first housing 22b and a second housing 22a fixed to the other end side of the first housing 22b in the axial direction A (right side in FIG. 1). The housing 22 houses the steering operation shaft 21 and a ball screw mechanism 33 and a driven pulley 34 that are described later. The pinion shaft 15 is rotatably supported in the second housing 22a. Rack teeth 21a are formed on the steering operation shaft 21. The rack teeth 21a and the pinion teeth 15d mesh with each other to constitute a rack and pinion mechanism.

The steering operation shaft 21 has joints 27 and 28 at its both ends. The joints 27 and 28 are formed such that the diameter of the steering operation shaft 21 is increased at its both ends. Tie rods 24 and 24 are coupled to both ends of the joints 27 and 28, and the distal ends of the tie rods 24 and 24 are coupled to knuckles (not illustrated) on which the steered wheels 26 are mounted. Thus, when the steering wheel 11 is steered to rotate, the steering torque of the steering wheel 11 is transmitted to the steering shaft 12 to rotate the pinion shaft 15. The rotation of the pinion shaft 15 is converted by the pinion teeth 15d and the rack teeth 21a into movement of the steering operation shaft 21 along the axial direction A (linear reciprocal movement). Therefore, the steering operation shaft 21 moves along the axial direction A. The movement of the steering operation shaft 21 along the axial direction A is transmitted to the knuckles (not illustrated) via the tie rods 24 and 24, thereby turning the steered wheels 26 and 26. Thus, the traveling direction of a vehicle is changed.

The ends of boots 25 and 25 on one side are fixed to both ends of the housing 22. The boots 25 and 25 have tubular bellows portions that cover the joint portions between the joints 27 and 28 and the tie rods 24 and 24 and are formed of a resin that is extensible and contractible in the axial direction A. The ends of the boots 25 and 25 on the other side are fixed to the tie rods 24 and 24. The boots 25 and 25 maintain air-tightness of a housing space of the steering operation mechanism 20 that includes the inside of the housing 22. This structure prevents entry of foreign matter or water into the housing 22.

The torque detection device 40 is fixed to an attachment opening 22c of the housing 22 that is located around the pinion shaft 15. The torque detection device 40 detects a torsion amount of the torsion bar 15c, and outputs a signal in accordance with the torsion amount to a control unit ECU. The torsion bar 15c herein refers to a member having such a characteristic as to be twisted in accordance with a difference between a torque of the input shaft 15a and a torque of the output shaft 15b.

The steering assist mechanism 30 is a mechanism configured to apply a steering assist force to the steering mechanism 10 with a motor M serving as a drive source. The motor M is controlled based on an output from the torque detection device 40. The steering assist mechanism 30 includes the first housing 22b, the second housing 22a, a third housing 31, an electric device MCU, a rotary shaft 32, the ball screw mechanism 33, and a transmission mechanism 35. As illustrated in FIG. 1, in the steering assist mechanism 30, the electric device MCU having the control unit ECU and the motor M as a unit is arranged below the steering operation shaft 21 (lower side in a gravity direction). The steering system S1 of this embodiment is constructed as a so-called rack-parallel type system, and is arranged inside an engine compartment in the front of the vehicle (outside a vehicle cabin).

The steering assist mechanism 30 applies the steering assist force to the steering mechanism 10 by transmitting a rotational torque output from the motor M to the ball screw mechanism 33 via the transmission mechanism 35 and converting the rotational torque by the ball screw mechanism 33 into a movement force for the linear reciprocal movement of the steering operation shaft 21.

The first housing 22b includes a first tubular portion 231 having a cylindrical shape, and a first steering assist housing 232 formed on the second housing 22a side of the first tubular portion 231. The first tubular portion 231 is a housing portion that mainly houses the steering operation shaft 21. The first steering assist housing 232 is a portion that mainly houses devices relating to the steering assist mechanism 30 together with a second steering assist housing 222. The first steering assist housing 232 is formed into a cylindrical shape with a diameter larger than that of the first tubular portion 231.

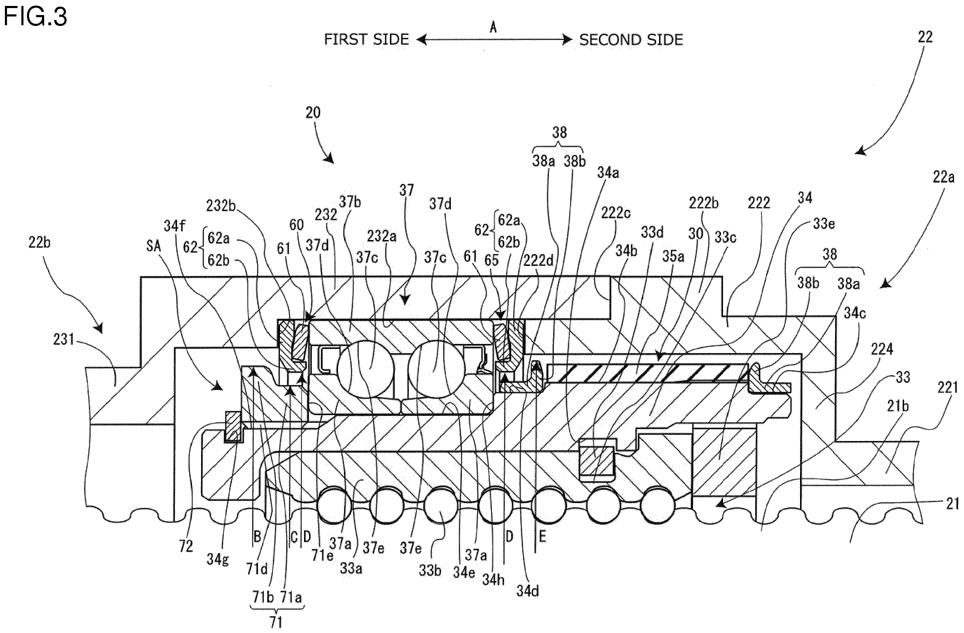

As illustrated in FIG. 2 and FIG. 3, the second housing 22a includes a second tubular portion 221 having a cylindrical shape, the second steering assist housing 222 formed on the first housing 22b side of the second tubular portion 221, and a wall portion 224 (illustrated in FIG. 3) that connects the second tubular portion 221 and the second steering assist housing 222 to each other and is formed in a direction orthogonal to the axial direction A. The second tubular portion 221 is a housing portion that mainly houses the steering operation shaft 21. The second steering assist housing 222 is a portion that mainly houses the devices relating to the steering assist mechanism 30. The second steering assist housing 222 is formed into a tubular shape that bulges downward with a diameter larger than that of the second tubular portion 221. An opening 222a (illustrated in FIG. 2) is formed in the end face of the part of the second steering assist housing 222 that bulges downward. The opening 222a passes through the second steering assist housing 222 in the axial direction A of the steering operation shaft 21.

A locking protrusion 222b is formed so as to protrude from the outer peripheral surface of the second steering assist housing 222. The face of the locking protrusion 222b on the first side in the axial direction A includes an abutment surface 222c extending in a direction orthogonal to the axial direction A. The end of the first steering assist housing 232 on the second side in the axial direction A is provided on an outer peripheral side of the end of the second steering assist housing 222 on the first side in the axial direction A so as to overlap this end of the second steering assist housing 222. The end face of the first steering assist housing 232 on the second side in the axial direction A abuts against the abutment surface 222c of the second steering assist housing 222. With this structure, the second housing 22a is coupled to the first housing 22b in a state in which the opening of the first steering assist housing 232 of the first housing 22b is closed by the second steering assist housing 222 of the second housing 22a.

As illustrated in FIG. 2, the third housing 31 is fixed via a plate 36 to a bulging end face 223 of the second steering assist housing 222, which is formed in a direction orthogonal to the axial direction A from the wall portion 224 (illustrated in FIG. 3). The surface of the third housing 31 that faces the bulging end face 223 of the second steering assist housing 222 has an opening 311. The opening 311 is closed by the plate 36. The plate 36 has a through hole 36a through which an output shaft 32b of the motor M is inserted in the axial direction A. The electric device MCU including the motor M is housed in the third housing 31. That is, the electric device MCU is attached to the housing 22 so as to be spaced away from the steering operation shaft 21, and the output shaft 32b of the motor M is arranged so as to extend inside the housing 22. Specifically, as illustrated in FIG. 2, the output shaft 32b is provided while extending inside the second housing 22a of the housing 22 so that the axis of the output shaft 32b is parallel to the axial direction A of the steering operation shaft 21.

As illustrated in FIG. 1, the electric device MCU includes the motor M and the control unit ECU for driving the motor M. The motor M outputs a rotational torque. The motor M includes an angle sensor (not illustrated) configured to detect a rotational angle of the output shaft 32b. The control unit ECU determines a steering assist torque based on a signal output from the torque detection device 40, and controls the rotational torque to be output from the motor M.

As illustrated in FIG. 2, the rotary shaft 32 is an output shaft of the motor M, and transmits the rotational torque output from the motor M. The rotary shaft 32 includes the output shaft 32b and a driving pulley 32a arranged on an outer peripheral side of the output shaft 32b. The output shaft 32b is rotatably supported at the through hole 36a of the plate 36 via a bearing 313. A part of the output shaft 32b extends from the inside of the third housing 31 toward the second steering assist housing 222 of the housing 22 that is located outside the third housing 31, and is housed in the second steering assist housing 222. The driving pulley 32a is provided on the outer peripheral surface of the output shaft 32b at a part located outside the third housing 31 in the axial direction A. The rotational torque generated by the motor M is transmitted to the driving pulley 32a.

As illustrated in FIG. 2, the ball screw mechanism 33 includes a ball screw shaft 21b and a ball nut 33a. The ball screw shaft 21b is formed on the outer periphery of the steering operation shaft 21 illustrated in FIG. 1 over a predetermined range along the axial direction A (left side in FIG. 1). The ball nut 33a threadedly engages with the ball screw shaft 21b of the steering operation shaft 21 via a plurality of balls 33b arrayed along the ball screw shaft 21b.

As illustrated in FIG. 2, the transmission mechanism 35 is constituted by the driving pulley 32a, a toothed belt 35a, and the driven pulley 34. Each of the driving pulley 32a and the driven pulley 34 is a toothed pulley having helical external teeth. The transmission mechanism 35 is a mechanism configured to transmit the rotational torque generated by the motor M between the driving pulley 32a and the driven pulley 34 via the toothed belt 35a. The driving pulley 32a is provided at the distal end of the output shaft 32b.

The toothed driven pulley 34 has a cylindrical shape, and is provided on the outer periphery of the ball nut 33a so as to be rotatable together with the ball nut 33a. In this embodiment, as illustrated in FIG. 3, the driven pulley 34 is fixed to the ball nut 33a so as to be rotatable together with the ball nut 33a by a key 33d and a screw member 33e. The key 33d engages with a keyway 34a formed on the inner peripheral surface of the driven pulley 34 and a keyway 33c formed on the outer peripheral surface of the ball nut 33a. The screw member 33e is threadedly attached to the opening of the driven pulley 34, and presses one end face of the ball nut 33a.

The driven pulley 34 is housed in the housing 22, and is rotatably attached to the housing 22 via a bearing 37. The structure around the bearing 37 is described later in detail. A toothing 34b having a helical gear shape is formed on the outer peripheral surface of the driven pulley 34 at a part located on the second side in the axial direction A. A first guide recess 34c is formed at a position adjacent to the toothing 34b of the driven pulley 34 on the second side in the axial direction A. The first guide recess 34c has an outside diameter smaller than the outside diameter of the root surface of the toothing 34b. A second guide recess 34d is formed at a position adjacent to the toothing 34b of the driven pulley 34 on the first side in the axial direction A. The second guide recess 34d has an outside diameter smaller than the outside diameter of the root surface of the toothing 34b.

On the outer peripheral surface of the first guide recess 34c and the outer peripheral surface of the second guide recess 34d, guide portions 38 formed into an annular shape are attached so as to be immovable in the axial direction A. The guide portion 38 is provided on the driven pulley 34 as a unit. The guide portion 38 is constituted by a base portion 38a having a cylindrical shape, and a flange portion 38b having a shape of a circular ring plate extending from one end of the base portion 38a toward an outer peripheral side of the base portion 38a in a direction orthogonal to the direction in which the base portion 38a is formed. The flange portion 38b is located at a position adjacent to the toothing 34b. The guide portion 38 on the first side in the axial direction A is a second retaining member described in the claims.

The toothed belt 35a is an annular rubber belt having a plurality of helical internal teeth on its inner peripheral side. The toothed belt 35a is looped over the toothing 34b formed on the outer periphery of the driven pulley 34 and a toothing 32c formed on the outer periphery of the driving pulley 32a while meshing with the toothings 34b and 32c. With this structure, the toothed belt 35a transmits the rotational torque between the driving pulley 32a and the driven pulley 34. The toothed belt 35a engaging with the toothing 34b of the driven pulley 34 is interposed between the flange portions 38b of the two guide portions 38. This structure restricts movement of the toothed belt 35a in the axial direction A, thereby preventing the toothed belt 35a from falling off the toothing 34b. A first surface of the flange portion 38b of the guide portion 38 (second retaining member) on the first side in the axial direction A faces a holding member 62 of a second elastic support portion 65, and a second surface of the flange portion 38b faces the end face of the toothed belt 35a.

With the structure described above, the steering assist mechanism 30 drives the motor M to rotate the output shaft 32b in response to an operation of rotating the steering wheel 11. Through the rotation of the output shaft 32b, the rotational torque is transmitted to the driving pulley 32a to rotate the driving pulley 32a. The rotation of the driving pulley 32a is transmitted to the driven pulley 34 via the toothed belt 35a. Through the rotation of the driven pulley 34, the ball nut 33a provided on the driven pulley 34 as a unit rotates. Through the rotation of the ball nut 33a, the steering assist force in the axial direction of the steering operation shaft 21 is transmitted to the steering operation shaft 21 via the balls 33b.

The structure around the bearing 37 is described below with reference to FIG. 3. A bearing attachment surface 34e is formed at a position adjacent to the second guide recess 34d of the driven pulley 34 on the first side in the axial direction A. The bearing attachment surface 34e has an outside diameter smaller than the outside diameters of the root surface of the toothing 34b and the second guide recess 34d. A stepped surface 34h is formed between the second guide recess 34d and the bearing attachment surface 34e. The stepped surface 34h extends in a direction orthogonal to the axial direction A. A screw portion 34f is formed at a position adjacent to the bearing attachment surface 34e on the first side in the axial direction A. A thread groove is formed on the screw portion 34f. A C-ring groove 34g is formed at a position adjacent to the screw portion 34f of the driven pulley 34 on the first side in the axial direction A. The C-ring groove 34g is recessed over the entire periphery.

In this embodiment, the bearing 37 is a double row angular contact ball bearing. The bearing 37 rotatably supports the driven pulley 34 on the second housing 22a and the first housing 22b. The bearing 37 includes an inner ring 37a, an outer ring 37b, and balls 37c in two rows. The inner ring 37a is formed into a substantially cylindrical shape, and has two inner ring raceway surfaces 37d that are formed on the outer peripheral surface so as to be recessed over the entire periphery. In this embodiment, the inner ring 37a is divided into two segments in the axial direction A. The outer ring 37b is formed into a substantially cylindrical shape, and has two outer ring raceway surfaces 37e that are formed on the inner peripheral surface so as to be recessed over the entire periphery. The outer ring 37b is arranged on an outer peripheral side of the inner ring 37a. The plurality of balls 37c are arranged between the inner ring raceway surface 37d of the inner ring 37a and the outer ring raceway surface 37e of the outer ring 37b so as to be rollable along a circumferential direction of the bearing 37. With this structure, the inner ring 37a and the outer ring 37b are rotatable relative to each other. As described above, the double row angular contact ball bearing is used as the bearing 37 in this embodiment, and thus a backlash between the inner ring 37a and the outer ring 37b can be suppressed.

The inner ring 37a is fitted to the bearing attachment surface 34e of the driven pulley 34. Therefore, the inner ring 37a rotates together with the driven pulley 34 and the ball nut 33a. The end face of the inner ring 37a that is located on the second side in the axial direction A abuts against the stepped surface 34h of the driven pulley 34.

The inner peripheral surface of the first steering assist housing 232 includes an outer ring sliding surface 232a having a bore diameter larger than that of the other part. The outer ring 37b is provided on an inner peripheral side of the outer ring sliding surface 232a. The outer peripheral surface of the outer ring 37b and the outer ring sliding surface 232a are fitted to each other by clearance fit.

That is, the bore diameter of the outer ring sliding surface 232a is larger than the outside diameter of the outer peripheral surface of the outer ring 37b. With this structure, the outer ring 37b is movable in the axial direction A relative to the outer ring sliding surface 232a of the first steering assist housing 232. A lubricant such as grease is applied between the outer peripheral surface of the outer ring 37b and the outer ring sliding surface 232a.

A pair of locking surfaces 222d and 232b are formed inside the housing 22. The locking surfaces 222d and 232b are located on both sides of the outer ring 37b. The locking surfaces 222d and 232b extend in a direction orthogonal to the axial direction A, and face each other so as to be spaced away from each other in the axial direction A. Specifically, the inner peripheral surface of the first steering assist housing 232 includes the first locking surface 232b that is connected to one end of the outer ring sliding surface 232a and extends in the direction orthogonal to the axial direction A. The first locking surface 232b and the end face of the outer ring 37b on the first side in the axial direction A are spaced away from each other.

The end face of the second housing 22a on the first side in the axial direction A, that is, the end face of the second steering assist housing 222 on the first side in the axial direction A includes the second locking surface 222d that extends in the direction orthogonal to the axial direction A. The second locking surface 222d and the end face of the outer ring 37b on the second side in the axial direction A are spaced away from each other.

A first elastic support portion 60 is provided between the first locking surface 232b and the end face of the outer ring 37b on the first side in the axial direction A. The second elastic support portion 65 is provided between the second locking surface 222d and the end face of the outer ring 37b on the second side in the axial direction A. The first elastic support portion 60 and the second elastic support portion 65 urge the outer ring 37b toward the center of its movement range by supporting (elastically supporting) the outer ring 37b so as to be elastically movable in the axial direction A. Each of the first elastic support portion 60 and the second elastic support portion 65 is constituted by an urging member 61 and a holding member 62. The urging member 61 and the holding member 62 are provided between the end face of the outer ring 37b on the first side in the axial direction A and the first locking surface 232b in order from the second side to the first side in the axial direction A. The urging member 61 and the holding member 62 are provided between the end face of the outer ring 37b on the second side in the axial direction A and the second locking surface 222d in order from the first side to the second side in the axial direction A. The urging member 61 is a metal disc spring having a circular ring shape with elasticity. The urging member 61 abuts against the end face of the outer ring 37b.

The holding member 62 is formed of a metal such as iron to have a circular ring shape and also have an L-shape in cross section. The holding member 62 is constituted by an anti-wear portion 62a having a shape of a circular ring plate, and a holding portion 62b having a shape of a flat cylinder extending from the inner edge of the anti-wear portion 62a in a direction orthogonal to the direction in which the anti-wear portion 62a is formed. The outside diameter of the holding portion 62b is set slightly smaller than the bore diameter of the urging member 61.

The urging member 61 is fitted to the holding portion 62b of the holding member 62. In this state, the holding portion 62b holds the urging member 61 while being located on an inner peripheral side of the urging member 61 over the entire periphery. The anti-wear portion 62a abuts against the urging member 61. The anti-wear portion 62a also abuts against the first locking surface 232b or the second locking surface 222d. The urging member 61 is attached between the end face of the outer ring 37b and the first locking surface 232b or the second locking surface 222d while being compressed in the axial direction A. By an urging force of the urging member 61, the outer ring 37b is located at a central position of its sliding range in the axial direction A. With this structure, the outer ring 37b is movable by a preset distance in the axial direction A relative to the first steering assist housing 232 of the housing 22.

The base portion 38a of the guide portion 38 (second retaining member) on the first side in the axial direction A is inserted through and located on an inner peripheral side of the holding member 62 of the second elastic support portion 65. The flange portion 38b of the guide portion 38 (second retaining member) is located at a position adjacent to the holding member 62 of the second elastic support portion 65 on the second side in the axial direction A. A circumscribed circle diameter E of the flange portion 38b of the guide portion 38 (second retaining member) is larger than an inscribed circle diameter D of the holding member 62 of the second elastic support portion 65. That is, the guide portion 38 (second retaining member) has a part with the dimension E larger than the inscribed circle diameter D of the second elastic support portion 65.

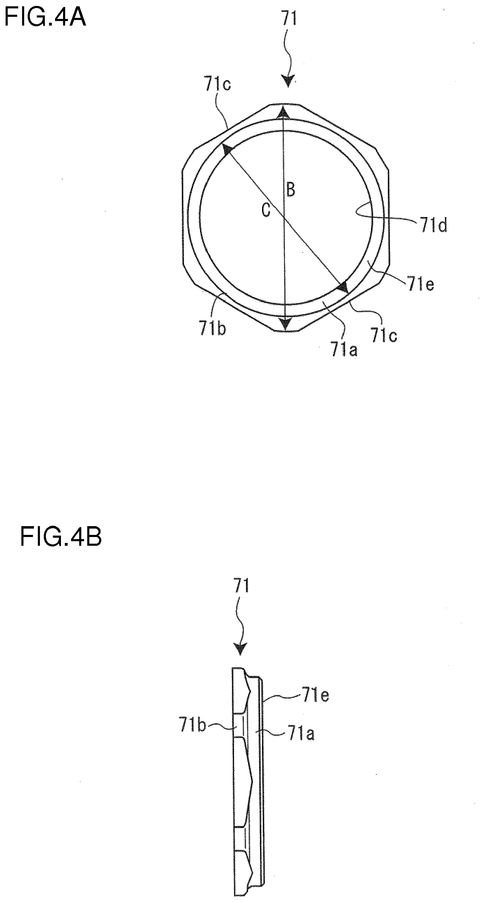

A retaining member 71 formed into an annular shape is fixed by being threadedly attached to the screw portion 34f of the driven pulley 34. The retaining member 71 is an internally threaded nut member that is removably provided by being threadedly attached to the driven pulley 34. The retaining member 71 is a first retaining member described in the claims. As illustrated in FIG. 3, FIG. 4A, and FIG. 4B, the retaining member 71 (first retaining member) is constituted by an abutment portion 71a and a protruding portion 71b. The abutment portion 71a has a cylindrical shape (circular ring shape). The abutment portion 71a has a circumscribed circle diameter C smaller than the inscribed circle diameter D of the holding member 62 of the first elastic support portion 60.

The protruding portion 71b is connected to the abutment portion 71a at a part opposite to the inner ring 37a. As illustrated in FIG. 4B, at least a pair of tool engagement surfaces 71c are formed on the protruding portion 71b. In this embodiment, the outer shape of the protruding portion 71b is a hexagonal nut shape, which is a polygonal shape. As illustrated in FIG. 4A, the protruding portion 71b has a circumscribed circle diameter B larger than the circumscribed circle diameter C of the abutment portion 71a. The circumscribed circle diameter B of the protruding portion 71b, which is the dimension B of a part of the protruding portion 71b that is largest in width, is set larger than the inscribed circle diameter D of the holding member 62 of the first elastic support portion 60.

A thread groove 71d is formed on the inner peripheral surface of the retaining member 71. The retaining member 71 is fixed to the driven pulley 34 such that the thread groove 71d is threadedly attached to the screw portion 34f of the driven pulley 34. In the state in which the retaining member 71 is fixed to the driven pulley 34, the abutment portion 71a is located on a radially inner side of the first elastic support portion 60. The protruding portion 71b is located at a position adjacent to the first elastic support portion 60 on the first side in the axial direction A, and faces the holding member 62 of the first elastic support portion 60.

An abutment surface 71e orthogonal to the axial direction A is formed at the distal end of the abutment portion 71a. The abutment surface 71e abuts against the face of the inner ring 37a on the first side to prevent movement of the inner ring 37a toward the first side in the axial direction A. As described above, the face of the inner ring 37a on the first side abuts against the abutment surface 71e of the retaining member 71, and the face of the inner ring 37a on the second side abuts against the stepped surface 34h of the driven pulley 34. Therefore, the inner ring 37a is immovable in the axial direction A relative to the driven pulley 34 (ball nut 33a). Thus, the retaining member 71 (first retaining member) is a member configured to fix the inner ring 37a to the driven pulley 34. A C-ring 72 is attached to the C-ring groove 34g. The C-ring 72 abuts against the end face of the retaining member 71 on the first side to prevent the retaining member 71 from falling off the screw portion 34f of the driven pulley 34.

As described above, the inner ring 37a is immovable in the axial direction A relative to the driven pulley 34 (ball nut 33a), whereas the outer ring 37b is movable by the preset distance in the axial direction A relative to the first steering assist housing 232 of the housing 22. Therefore, the driven pulley 34, the ball nut 33a, and the steering operation shaft 21 are movable by the preset distance in the axial direction A relative to the housing 22.

Next, actions of the steering system S1 of this embodiment are described. When a driver steers the steering wheel 11 that is set at a neutral position, as described above, a force in the axial direction A is applied to the steering operation shaft 21 by the pinion teeth 15d and the rack teeth 21a. As described above, the driven pulley 34, the ball nut 33a, and the steering operation shaft 21 are movable by the preset distance in the axial direction A relative to the housing 22. Therefore, when the driver steers the steering wheel 11 that is set at the neutral position, the force in the axial direction A is applied to the steering operation shaft 21, and the steering operation shaft 21 slightly moves by the preset distance at the maximum in the axial direction A relative to the housing 22 against the urging force of the urging member 61. The movement of the steering operation shaft 21 in the axial direction A does not involve the rotation of the ball nut 33a. Thus, the steered wheels 26 and 26 are turned from their neutral positions. Therefore, when the driver operates the steering wheel 11 that is set at the neutral position, a quick initial response is obtained in the steering operation for the steered wheels 26 and 26 that are set at the neutral positions.

Even if the steering system S1 is vibrated through the steered wheels 26 and 26, the holding portion 62b of the holding member 62 restricts displacement of the urging member 61 in the gravity direction (direction orthogonal to the axial direction A). Therefore, misalignment of the urging member 61 in the gravity direction is prevented. Thus, the outer ring 37b of the bearing 37 can securely be urged toward the central position of its movement range by the urging force of the urging member 61. The anti-wear portion 62a of the holding member 62 is located between the urging member 61 and the first locking surface 232b or the second locking surface 222d of the housing 22. Thus, even if the steering system S1 is vibrated and the urging member 61 is therefore vibrated, the first locking surface 232b or the second locking surface 222d of the housing 22 formed of a light metal such as an aluminum alloy is prevented from being worn out.

A method for mounting the steering system S 1 is described below. In this embodiment, the steering operation shaft 21, the ball nut 33a, the plurality of balls 33b, the ball nut 33a, the driven pulley 34, the key 33d, the screw member 33e, the two guide portions 38, the bearing 37, the first elastic support portion 60, the second elastic support portion 65, the retaining member 71, and the C-ring 72 are first assembled into a subassembly SA in advance. Next, the subassembly SA is inserted into and mounted on the first steering assist housing 232 of the first housing 22b.

Next, the toothed belt 35a is looped over the driven pulley 34. Next, the second housing 22a is mounted on the first housing 22b by attaching the second steering assist housing 222 of the second housing 22a to the first steering assist housing 232 so that the second steering assist housing 222 closes the opening of the first steering assist housing 232. Then, the remaining components are attached to the subassembly SA, the second housing 22a, and the first housing 22b.

As described above, the circumscribed circle diameter B of the protruding portion 71b is set larger than the inscribed circle diameter D of the holding member 62 of the first elastic support portion 60 (illustrated in FIG. 3). Therefore, when the subassembly SA is mounted on the second housing 22a and the first housing 22b, the first elastic support portion 60 assembled into the subassembly SA is locked by the retaining member 71 (first retaining member), thereby preventing the first elastic support portion 60 from falling off the subassembly SA. The circumscribed circle diameter E of the flange portion 38b of the guide portion 38 (second retaining member) is larger than the inscribed circle diameter D of the holding member 62 of the second elastic support portion 65. Therefore, the second elastic support portion 65 assembled into the subassembly SA is locked by the guide portion 38 (second retaining member) on the first side in the axial direction A, thereby preventing the second elastic support portion 65 from falling off the subassembly SA.

According to the embodiment described above, the steering system S1 includes the steering operation shaft 21, the ball screw mechanism 33, the motor M, the driving pulley 32a, the driven pulley 34, the annular toothed belt 35a, the housing 22, the bearing 37, the first elastic support portion 60, the second elastic support portion 65, the retaining member 71 (first retaining member), and the guide portion 38 (second retaining member). The steering operation shaft 21 is configured to move in the axial direction A to turn the steered wheels 26 and 26. The ball screw mechanism 33 includes the ball screw shaft 21b formed on the outer peripheral surface of the steering operation shaft 21, and the ball nut 33a threadedly engaging with the ball screw shaft 21b via the plurality of balls 33b. The motor M is configured to output a rotational torque. The rotational torque output from the motor M is transmitted to the driving pulley 32a. The driven pulley 34 is provided on the ball nut 33a so as to be rotatable together with the ball nut 33a. The toothed belt 35a is configured to transmit the rotational torque between the driving pulley 32a and the driven pulley 34. The housing 22 houses the steering operation shaft 21, the ball screw mechanism 33, and the driven pulley 34 and has the first locking surface 232b and the second locking surface 222d facing each other in the axial direction A. The bearing 37 includes the inner ring 37a fitted to the driven pulley 34, and the outer ring 37b provided on the outer peripheral side of the inner ring 37a so as to be rotatable relative to the inner ring 37a and to be movable in the axial direction A relative to the housing 22 between the first locking surface 232b and the second locking surface 222d. The first elastic support portion 60 is formed into an annular shape, provided between the first locking surface 232b and one end face of the outer ring 37b, and configured to elastically support the outer ring 37b in the axial direction A. The second elastic support portion 65 is formed into an annular shape, provided between the second locking surface 222d and the other end face of the outer ring 37b, and configured to elastically support the outer ring 37b in the axial direction A. The retaining member 71 (first retaining member) is formed into an annular shape, removably provided on the driven pulley 34, and configured to fix the inner ring 37a to the driven pulley 34 and to lock the first elastic support portion 60. The guide portion 38 (second retaining member) is formed into an annular shape, provided on the driven pulley 34 as a unit, and configured to lock the second elastic support portion 65.

According to the steering system S1 described above, the retaining member 71 (first retaining member) locks the first elastic support portion 60, and the guide portion 38 (second retaining member) locks the second elastic support portion 65. Therefore, when the subassembly SA obtained by assembling the steering operation shaft 21, the ball screw mechanism 33, the driven pulley 34, the first elastic support portion 60, and the second elastic support portion 65 is mounted on the housing 22, the first elastic support portion 60 is locked by the retaining member 71 (first retaining member), and the second elastic support portion 65 is locked by the guide portion 38 (second retaining member). Thus, when the subassembly SA is mounted on the housing 22, the first elastic support portion 60 and the second elastic support portion 65 are securely prevented from falling off the subassembly SA.

The retaining member 71 (first retaining member) includes the abutment portion 71a abutting against the end face of the inner ring 37a, located on the radially inner side of the first elastic support portion 60, and having the circumscribed circle diameter C smaller than the bore diameter of the first elastic support portion 60, and the protruding portion 71b connected to the abutment portion 71a at a part opposite to the inner ring 37a, having the circumscribed circle diameter B larger than the circumscribed circle diameter C of the abutment portion 71a, and facing the first elastic support portion 60. As described above, the abutment portion 71a is located on the radially inner side of the first elastic support portion 60, and the protruding portion 71b faces the first elastic support portion 60. Thus, when the subassembly SA is mounted on the housing 22, the first elastic support portion 60 cannot pass across the protruding portion 71b. Accordingly, the first elastic support portion 60 is prevented from falling off the subassembly SA.

The retaining member 71 (first retaining member) is an internally threaded nut member threadedly attached to the driven pulley 34. As described above, the internally threaded nut member configured to fix the inner ring 37a to the driven pulley 34 and threadedly attached to the driven pulley 34 is used as the retaining member 71 (first retaining member). Therefore, the structure capable of preventing the first elastic support portion 60 from falling off the subassembly SA can be attained by simply forming the protruding portion 71b on the internally threaded nut member that exists hitherto. As a result, the steering system S1 in which the first elastic support portion 60 can be prevented from falling off the subassembly SA can be provided while suppressing an increase in cost, weight, and size.

The guide portion 38 (second retaining member) is a member configured to restrict the movement of the toothed belt 35a in the axial direction A. The surface of the flange portion 38b of the guide portion 38 (second retaining member) on the first side in the axial direction A faces the second elastic support portion 65. The surface of the flange portion 38b of the guide portion 38 (second retaining member) on the second side in the axial direction A faces the toothed belt 35a. As described above, the guide portion 38 configured to restrict the movement of the toothed belt 35a in the axial direction A is used as the second retaining member configured to lock the second elastic support portion 65. Therefore, the structure capable of preventing the second elastic support portion 65 from falling off the subassembly SA can be attained by the guide portion 38 that exists hitherto. As a result, the steering system S1 in which the second elastic support portion 65 can be prevented from falling off the subassembly SA can be provided while suppressing an increase in cost, weight, and size.

The housing 22 includes the first housing 22b formed into a tubular shape and having the first locking surface 232b formed on its inner peripheral surface, and the second housing 22a formed into a tubular shape, coupled to the first housing 22b while closing the opening of the first housing 22b, and having the second locking surface 222d formed on the end face in the axial direction A. Thus, the subassembly SA is mounted on the first housing 22b, and the second housing 22a is attached to the first housing 22b so as to close the opening of the first housing 22b. Through this simple operation, the subassembly SA can be housed in and mounted on the second housing 22a and the first housing 22b while preventing the first elastic support portion 60 and the second elastic support portion 65 from falling off the subassembly SA.

Other embodiments are described below. In the embodiment described above, the driven pulley 34 is rotatably supported on the housing 22 by the bearing 37. There may be employed an embodiment in which the ball nut 33a is rotatably supported on the housing 22 by the bearing 37. In this embodiment, the inner ring 37a is fitted to the outer peripheral surface of the ball nut 33a, and the retaining member 71 is fixed by being threadedly attached to the ball nut 33a. In this embodiment, the retaining member 71 (first retaining member) is removably provided by being threadedly attached to the ball nut 33a to fix the inner ring 37a to the ball nut 33a and to lock the first elastic support portion 60. There may also be employed an embodiment in which the guide portion 38 (second retaining member) is provided on the ball nut 33a as a unit.

In the embodiment described above, the urging member 61 is a disc spring. The urging member 61 may be a wave washer or a rubber member having a circular ring shape.

In the embodiment described above, each of the first elastic support portion 60 and the second elastic support portion 65 is constituted by the urging member 61 and the holding member 62. There may be employed an embodiment in which each of the first elastic support portion 60 and the second elastic support portion 65 is constituted by the urging member 61 alone. In this embodiment, the circumscribed circle diameter B of the protruding portion 71b is set larger than the inscribed circle diameter D of the urging member 61 that is the first elastic support portion 60. The circumscribed circle diameter E of the flange portion 38b of the guide portion 38 on the first side is set larger than the inscribed circle diameter D of the urging member 61 that is the second elastic support portion 65.

In the embodiment described above, the guide portion 38 is provided separately from the driven pulley 34. There may be employed an embodiment in which the guide portion 38 is provided integrally with the driven pulley 34.

## Claims

1. A steering system, comprising:
a steering operation shaft configured to move in an axial direction to turn a steered wheel;
a ball screw mechanism including:
a ball screw shaft formed on an outer peripheral surface of the steering operation shaft; and
a ball nut threadedly engaging with the ball screw shaft via a plurality of balls;
a motor configured to output a rotational torque;
a driving pulley to which the rotational torque output from the motor is transmitted;
a driven pulley provided on the ball nut so as to be rotatable together with the ball nut;
an annular toothed belt configured to transmit the rotational torque between the driving pulley and the driven pulley;
a housing that houses the steering operation shaft, the ball screw mechanism, and the driven pulley and has a first locking surface and a second locking surface facing each other in the axial direction;
a bearing including:
an inner ring fitted to the ball nut or the driven pulley; and
an outer ring provided on an outer peripheral side of the inner ring so as to be rotatable relative to the inner ring and to be movable in the axial direction relative to the housing between the first locking surface and the second locking surface;
a first elastic support portion formed into an annular shape, provided between the first locking surface and one end face of the outer ring, and configured to elastically support the outer ring in the axial direction;
a second elastic support portion formed into an annular shape, provided between the second locking surface and the other end face of the outer ring, and configured to elastically support the outer ring in the axial direction;
a first retaining member formed into an annular shape and configured to fix the inner ring to the ball nut or the driven pulley and to lock the first elastic support portion; and
a second retaining member formed into an annular shape, provided on the ball nut or the driven pulley as a unit, and configured to lock the second elastic support portion.

2. The steering system according to claim 1, wherein the first retaining member includes:
an abutment portion abutting against an end face of the inner ring, located on a radially inner side of the first elastic support portion, and having a circumscribed circle diameter smaller than a bore diameter of the first elastic support portion; and
a protruding portion connected to the abutment portion at a part opposite to the inner ring, having a circumscribed circle diameter larger than the circumscribed circle diameter of the abutment portion, and facing the first elastic support portion.

3. The steering system according to claim 1 or 2, wherein the first retaining member is an internally threaded nut member threadedly attached to the ball nut or the driven pulley.

4. The steering system according to any one of claims 1 to 3, wherein
the second retaining member is a member configured to restrict movement of the toothed belt in the axial direction,
a surface of the second retaining member on a first side in the axial direction faces the second elastic support portion, and
a surface of the second retaining member on a second side in the axial direction faces the toothed belt.

5. The steering system according to any one of claims 1 to 4, wherein the housing includes:
a first housing formed into a tubular shape and having the first locking surface formed on its inner peripheral surface; and
a second housing formed into a tubular shape, coupled to the first housing while closing an opening of the first housing, and having the second locking surface formed on an end face in the axial direction.
